# EUROPÄISCHE PATENTSCHRIFT

(11) **EP 0 927 656 B1**
(45) Veröffentlichungstag und Bekanntmachung des Hinweises auf die Patenterteilung: **19.11.2003**
(21) Anmeldenummer: 98124468.4
(22) Anmeldetag: 23.12.1998
(51) Int. Cl.: B60K 37/06

(54) **Bewegbare Bedienkonsole für ein Kraftfahzeug**
Movable control panel for a motor vehicle
Panneau de commande mobile pour automobile

(30) Priorität: 02.01.1998 DE 19800073
(43) Veröffentlichungstag der Anmeldung: 07.07.1999
(73) Patentinhaber: Volkswagen Aktiengesellschaft, 38436 Wolfsburg (DE)
(72) Erfinder: Andronis, Odysseus, 38100 Braunschweig (DE)

(56) Entgegenhaltungen:
- DE-A- 4 436 420
- DE-U- 6 929 353
- FR-A- 2 747 347
- US-A- 5 261 502

## Beschreibung

Die Erfindung betrifft eine bewegbare Bedienkonsole gemäß dem Oberbegriff des Patentanspruchs 1.

Aus der US-A-4,471,848 ist eine Bedienkonsole mit einem speziellen Verstell- und Feststellmechanismus für die Bedienkonsole in der Art eines Kugelgelenks bekannt.

Die DE 6929353 U1 beschreibt eine bewegbare Bedienkonsole, bei der die im manuellen Funktionsbereich liegenden Bedienelemente über eine Rasteinrichtung horizontal verstellbar sind.

Die US-A-5,261,502 zeigt eine bewegbare Bedienkonsole für ein Kraftfahrzeug, die sich zwischen zwei Positionen in Fahrzeuglängsrichtung verschieben läßt.

Die gattungsbildende FR-A-2 747 347 beschreibt eine Bedienkonsole für ein Kraftfahrzeug mit einem fest eingebauten Handschuhkasten und einem an diesem über eine horizontale Schwenkachse angelenkten Aufnahmekörper für Bedienelemente. Der Aufnahmekörper läßt sich von einer Gebrauchsstellung um rund 180° um die im wesentlichen in Fahrzeugquerrichtung ausgerichtete Achse in eine Nichtgebrauchsstellung schwenken. In der Gebrauchsstellung verdeckt er eine weitere Bedieneinheit, und ein darunter liegendes Handschuhfach ist offen zugänglich, während er in der Nichtgebrauchsstellung das Handschuhfach verschließt und die weitere Bedieneinheit freigibt.

Von diesem Stand der Technik ausgehend ist es die Aufgabe der vorliegenden Erfindung, eine gattungsgemäße Bedienkonsole derart weiterzuentwickeln, daß eine höhere Flexibilität hinsichtlich der Anordnung ihrer Bedienelemente bzw. -einheiten erreicht wird.

Diese Aufgabe wird bei einem gattunsgemäßen Bedienelement durch die kennzeichnenden Merkmale des Hauptanspruchs gelöst. Vorteilhafte Ausfürhungen beschreiben die Unteransprüche.

Im Gegensatz zur gattungsbildenden FR 2 747 347, bei der die Bedienkonsole lediglich um eine Achse geschwenkt werden kann, kann bei der vorliegenden Erfindung durch die zwei im wesentlichen parallel zueinander stehenden Achsen die Bedienkonsole an den Fahrer und sein Sichtfeld optimal angepasst werden. Durch diese Ausgestaltung wird eine höchst flexible Einstellmöglichkeit der Bedienkonsole erzielt.

Als bevorzugte Weiterbildung des Erfindungsgedankens ist vom Fahrer aus betrachtet der Aufnahmekörper derart angeordnet, daß er sich im wesentlichen oberhalb des Tragkörpers befindet. Dies führt zu einem optimalen Zugriff auf die funktionswesentlichen Bedienelemente. Darüber hinaus wird so ein unbeabsichtigtes Betätigen der funktionswesentlichen Bedienelemente, die im Aufnahmekörper angeordnet sind, bei Betätigung der anderen Bedienelemente, die im Tragkörper angeordnet sind, ausgeschlossen.

Zweckmäßigerweise ist vorgesehen, daß der Aufnahmekörper im Umriß im wesentlichen zylindrisch ausgeführt ist. Dies führt zu einer kompakten und funktionsgerechten Bauweise des Aufnahmekörpers. Funktionsbewegungen der integrierten Bedienelemente um die Längsachse des Aufnahmekörpers können zudem konstruktiv leicht umgesetzt werden.

Wenn der Tragkörper eine erste ebene Tragfläche und eine zweite ebene Tragfläche umfaßt, die in einem stumpfen Winkel zueinander stehen, so erhöht dies die Kompaktheit der Bedienkonsole und erleichtert eine Befestigung von Bedienelementen an dem Tragkörper. Dabei kann vorteilhafterweise wenigstens eine Tragfläche wenigstens eine Aussparung aufweisen. Durch diese können beispielsweise Befestigungsschrauben hindurchragen und mit den Bedienelementen in Eingriff gelangen. Wenn zusätzlich die Tragflächen im Grundriß jeweils in etwa rechteckig sind, wird eine gut ausnutzbare Befestigungsfläche geschaffen.

In höchst vorteilhafter Weise ist eine Bedieneinrichtung für Heizung und Gebläse vorgesehen, die konzentrisch zueinander angeordnete Bedienelemente für Heizung einerseits und Gebläse andrerseits umfaßt, wodurch für den Fahrer die Bedienergonomie deutlich erhöht wird, da weniger Wege mit der Hand zurückzulegen sind.

Wenn im Aufnahmekörper ein Bedienelement zur Einstellung des Getriebes, jeweils ein Bedienelement für Heizung einerseits und Gebläse andrerseits sowie ein Bedienelement zur Verteilung des Luftstroms aufgenommen sind, werden funktionswesentliche Bedienelemente im Aufnahmekörper integriert.

Eine höchst zweckmäßige Anordnung aller Bedienelemente wird erzielt, wenn am Tragkörper eine Schaltereinheit und unterhalb dieser eine Displayeinheit befestigt sind.

Zur Erhöhung der Stabilität der Bedienkonsole können der Aufnahmekörper und der Tragkörper einstückig miteinander verbunden sein.

Die Erfindung soll nun anhand eines bevorzugten Ausführungsbeispiels und der beiliegenden Figuren näher erläutert werden. Dabei zeigen
- Fig.1: eine perspektivische Prinzipansicht der erfindungsgemäßen Bedienkonsole im Lenkradbereich eines Kraftfahrzeugs
- Fig.2: eine Draufsicht auf die erfindungsgemäße Bedienkonsole, wobei andere in Fig. 1 gezeigte Elemente des Fahrzeuginnenraums nicht dargestellt sind
- Fig.3: eine seitliche Prinzipansicht der Bedienkonsole, wobei auch hier andere in Fig. 1 gezeigte Elemente des Fahrzeuginnenraums nicht dargestellt sind

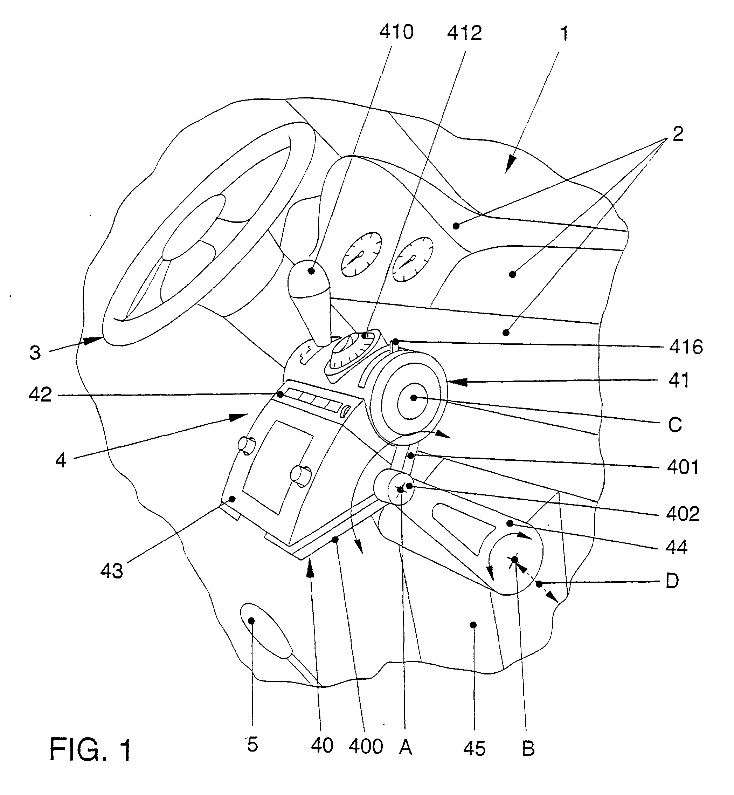

Zunächst wird auf Fig. 1 Bezug genommen. Diese zeigt eine erfindungsgemäße Bedienkonsole 4, welche im Steuerbereich 1 eines Kraftfahrzeugs angeordnet ist. Ferner ist eine aus Lenkrad und Lenksäule bestehende Steuereinrichtung 3 ersichtlich sowie ein Armaturenbereich 2 angedeutet. Die Bedienkonsole 4 befindet sich, in Fahrtrichtung betrachtet, rechts neben der Steuereinrichtung 3, etwas tiefer als das Lenkrad gelegen. Im unteren Bereich der Fig.1 ist ein Bedienhebel 5 für die Feststellbremse des Kraftfahrzeugs ersichtlich.

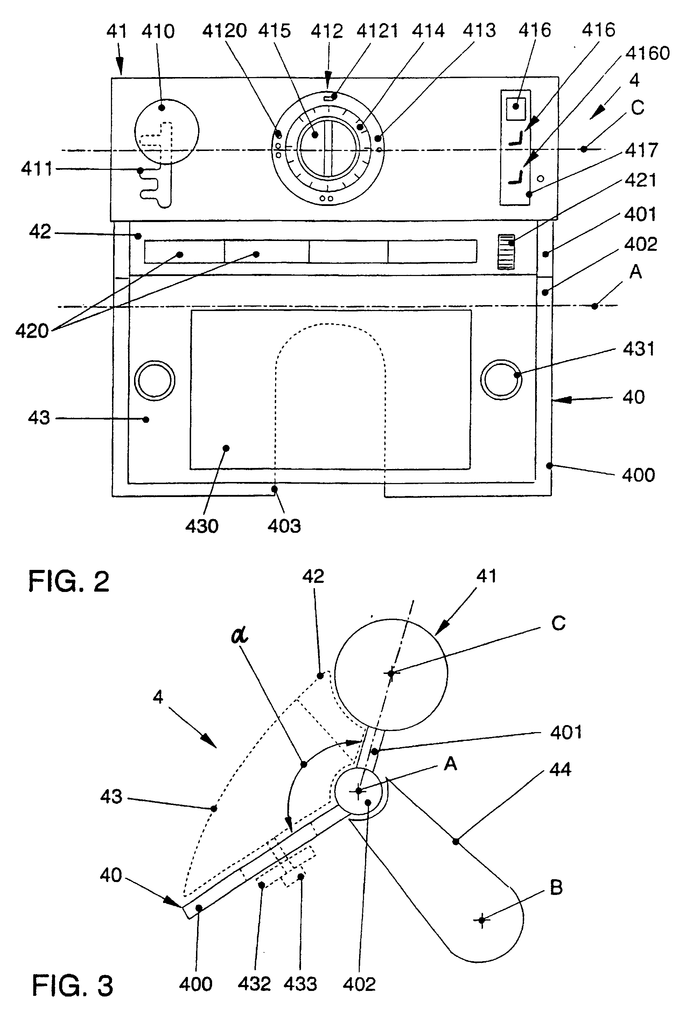

Wie anhand von Fig. 1 und 3 ersichtlich ist, weist die Bedienkonsole 4 einen Tragkörper 40 zur lösbaren Befestigung von elektronischen Funktionselementen, beispielsweise einer Schaltereinheit 42 für eine Musikanlage und einer Displayeinheit 43 für ein Navigationssystem, auf. Der Tragkörper 40 teilt sich in eine erste ebene Tragfläche 400 mit im wesentlichen rechteckigem Grundriß und eine zweite ebene Tragfäche 401 mit ebenso in etwa rechteckigem Grundriß auf. Beide Tragflächen 400, 401 sind über wenigstens einen in etwa zylindrischen Verbindungskörper 402 miteinander verbunden und erstrecken sich im Querschnitt betrachtet flügelartig von diesem aus. Dabei nehmen die Tragkörper 400, 401 zueinander einen zum Fahrzeuginnenraum gerichteten stumpfen Winkel α ein, der vorzugsweise bei ca. 120 ° bis 140 ° liegt. Durch den Verbindungskörper 402 verläuft eine horizontale Längsachse A, um die der Tragkörper 40 schwenkbar gehalten ist (vgl. Doppelpfeil). Der Verbindungskörper 402 ist in nicht näher dargestellter Weise schwenkbar mit einem Haltebügel 44 verbunden, der seinerseits wiederum um eine horizontale Achse B schwenkbar mit einer Grundkonsole 45 verbunden ist (vgl. Doppelpfeil).

Mit der zweiten Tragfläche 401 ist ein in seiner Außenkontur im wesentlichen zylindrischer Aufnahmekörper 41 verbunden, mit einer Längsachse C, die in etwa parallel zu einer Längsseite einer Tragfläche 400 bzw. 401 ausgerichtet ist und die in etwa in der Ebene der zweiten Tragfläche 401 liegt. Der Aufnahmekörper 401 dient zur unveränderbaren Aufnahme bzw. Integration funktionswesentlicher Bedienelemente, wie zum Beispiel eines Joysticks 410 für die Getriebeeinstellung bzw. Gangwahl, einer Bedieneinrichtung 412 für Heizung und Gebläse sowie eines Bedienhebels 416 zur Verteilung des Luftstroms.

Durch die Schwenkbarkeit des Tragkörpers 40 um die Achse A und die Schwenkbarkeit des mit diesem verbundenen Haltebügels 44 um die Achse B kann auf einfache Weise eine für den jeweiligen Fahrzeugführer angenehme Position der Bedienkonsole 4 eingestellt werden. Des weiteren wäre eine Verstellmöglichkeit der Bedienkonsole 4 in einer zusätzlichen Richtung D denkbar, was durch den gestrichelten Doppelpfeil lediglich angedeutet ist. Hierbei könnte beispielsweise der Haltebügel 44 teleskopartig ausgeführt sein (nicht dargestellt). Die Art der Feststellung der Bedienkonsole 4 in der gewünschten Position ist ebenso nicht näher dargestellt und kann beispielsweise über Reibschluß oder auch über Rastmittel erfolgen.

Die fertigungstechnische Konstruktion der Bedienkonsole 4 anbetreffend, sei angemerkt, daß der Tragkörper 40 und der Aufnahmekörper 41 bevorzugterweise einstückig, beispielsweise im Gußverfahren hergestellt sein können. Durch die Einstückigkeit wird eine hohe Stabilität des durch Tragkörper 40 und Aufnahmekörper 41 gebildeten Körpers erreicht.

Fig. 2 zeigt den durch Tragkörper 40 und Aufnahmekörper 41 gebildeten Körper der erfindungsgemäßen Bedienkonsole 4 von oben mit den bereits erwähnten Bedienelementen. Es ist ersichtlich, daß der Aufnahmekörper 41 in seiner Länge in etwa der Länge des Tragkörpers 40 bzw. seiner Tragflächen 400, 401 entspricht. Der Joystick 410 läßt sich zur Getriebeeinstellung in einer Führung 411 bewegen und ist in Fahrtrichtung gesehen ganz links am Aufnahmekörper 41, also nächstliegend zu einem Fahrzeugführer, angeordnet.

Rechts neben dem Joystick 410, in etwa im mittleren Bereich des Aufnahmekörpers 41, befindet sich die Bedieneinrichtung 412 für Heizung und Gebläse. Die Bedieneinrichtung 412 umfaßt dabei einen Drehschalter 415 zur Einstellung der Gebläsestufe, der konzentrisch von einem Stellring 414 zur Vorwahl der gewünschten Raumtemperatur umgeben wird. Die Bedienelemente 414, 415 werden ebenfalls konzentrisch von einer in etwa ringförmigen Einfassung 413 umgeben, auf deren Stirnseite Markierungen 4120 bzw. Sichtfenster 4121 zur Kontrolle der eingestellten Gebläsestufe bzw. Raumtemperatur vorgesehen sind.

Im rechten Bereich des Aufnahmekörpers 41 ist der -ggf. mehrgliedrig ausgeführte-Bedienhebel 416 zur Verteilung des Luftstroms und/oder Intensitätssteuerung und/oder Temperaturbeeinflussung angeordnet. Der Bedienhebel 416 läßt sich in einer länglichen Aussparung 417 in Umfangsrichtung des Aufnahmekörpers 41 bewegen und bringt entsprechende, die jeweilige Lüftungsverteilung zeigende Symbole 4160 mit einer Markierung zur Deckung.

Unterhalb des Aufnahmekörpers 41 befindet sich die Schaltereinheit 42 mit entsprechenden Druckschaltern 420 und/oder einem oder mehreren Drehschaltern 421. Die Schaltereinheit 42 schließt nahezu bündig an den Aufnahmekörper 41 an und entspricht in ihrer Länge in etwa der Länge des Aufnahmekörpers 41. Unterhalb der Schaltereinheit 42 schließt sich wiederum die Displayeinheit 43 mit einem Display 430 und Drehknöpfen 431 an, wobei die Außenflächen der Bedieneinheiten 42, 43 in etwa miteinander fluchten.

Zwecks einer einfachen Befestigung der Bedieneinheiten 42 und 43 auf dem Tragkörper 40 kann die erste Tragfläche 400 mit einer sich von ihrem unteren Rand nach oben erstreckenden Aussparung 403 versehen sein. Diese kann beispielsweise zum Hindurchlassen einer Befestigungsschraube 433 dienen, die in die Displayeinheit 43 eingreift und diese gegen eine Platte 432 anzieht (vgl. Fig. 3, wobei die Einheiten 42 und 43 sowie die Befestigungsschraube nur gestrichelt angedeutet sind). Bei entsprechender Dimensionierung der Aussparung 403 ist ein sehr flexibles Ausrichten und eine besonders leichte Montage der Bedieneinheiten 42 und 43 auf dem Tragkörper 40 möglich.

Allerdings ist auch vorstellbar, daß die Befestigung der Bedieneinheiten 42 und 43 mittels nicht dargestellter, von vornherein in die Bedieneinheiten 42, 43 und den Tragkörper 40 eingebrachter Führungs- und/oder Rastelemente erfolgt. Diese könnten unter Umständen gleichzeitig zur Herstellung einer erforderlichen elektrischen Verbindung dienen. Es sei an dieser Stelle angemerkt, daß die Ausgestaltung der auf dem Tragkörper 40 anzuordnenden Bedieneinheiten bevorzugt in Modulbauweise vorgeschlagen wird, wodurch die Flexibilität der Anordnung weiter erhöht wird. Beispielsweise könnte statt der Displayeinheit 43 für ein Navigationssystem auch eine Bedieneinheit für einen Bordcomputer vorgesehen werden.

## Patentansprüche

1. Bewegbare Bedienkonsole (4) für ein Kraftfahrzeug, aufnehmend mehrere Bedienelemente bzw. -einheiten (42, 43, 410, 412, 416) im visuellen und/ oder manuellen Funktionsbereich des Fahrers, mit wenigstens einem Aufnahmekörper (41 ) zur Integration funktionswesentlicher Bedienelemente bzw. -einheiten (410, 412, 416), wobei der Aufnahmekörper (41 ) an einem Tragkörper (40) angeordnet und um eine in Fahrzeugquerrichtung ausgerichtete Achse (A) schwenkbar gehaltert ist, **dadurch gekennzeichnet, daß** der Tragkörper (40) um die eine Achse (A) und um eine im wesentlichen parallel zu der einen Achse (A) ausgerichtete weitere Achse (B) schwenkbar gehaltert ist.

2. Bedienkonsole nach Anspruch 1, **dadurch gekennzeichnet, daß** der Tragkörper (40) an einem Halterungsbügel (44) angeordnet ist, an dem die weitere Achse (B) ausgebildet ist.

3. Bedienkonsole nach Anspruch 1 oder 2, **dadurch gekennzeichnet, daß** diese in Fahrzeugquerrichtung verstellbar ist.

4. Bedienkonsole nach einem der Ansprüche 1 bis 3, **dadurch gekennzeichnet, daß** der Tragkörper (40) eine erste ebene Tragfläche (400) und eine zweite ebene Tragfläche (401) umfaßt, die in einem stumpfen Winkel (α) zueinander stehen.

5. Bedienkonsole nach Anspruch 4, **dadurch gekennzeichnet, daß** wenigstens eine Tragfläche (400) wenigstens eine Aussparung (403) aufweist.

6. Bedienkonsole nach einem der Ansprüche 1 bis 5, **dadurch gekennzeichnet, daß** der Aufnahmekörper (41 ) vom Fahrer aus betrachtet derart angeordnet ist, daß er sich im wesentlichen oberhalb des Tragkörpers (40) befindet.

7. Bedienkonsole nach einem der Ansprüche 1 bis 6, **dadurch gekennzeichnet, daß** der Aufnahmekörper (41) im Umriß im wesentlichen zylindrisch ausgeführt ist.

8. Bedienkonsole nach einem der Ansprüche 1 bis 7, **dadurch gekennzeichnet, daß** der Aufnahmekörper (41 ) und der Tragkörper (40) einstückig miteinander verbunden sind.

9. Bedienkonsole nach einem der Ansprüche 1 bis 8, **dadurch gekennzeichnet, daß** im Aufnahmekörper (41 ) ein Bedienelement (410) zur Einstellung des Getriebes, jeweils ein Bedienelement (414, 415) für Heizung einerseits und Gebläse andererseits sowie ein Bedienelement (416) zur Verteilung des Luftstroms aufgenommen sind.

10. Bedienkonsole nach Anspruch 9, **dadurch gekennzeichnet, daß** die Bedienelemente (412) für Heizung und Gebläse konzentrisch zueinander angeordnet sind.

11. Bedienkonsole nach einem der Ansprüche 1 bis 10, **dadurch gekennzeichnet, daß** am Tragkörper (40) eine Schaltereinheit (42) und unterhalb dieser eine Displayeinheit (43) befestigt sind.

## Claims

1. Movable operator control console (4) for a motor vehicle, holding a plurality of operator control elements and units (42, 43, 410, 412, 416) in the visual and/or manual functional area of the driver, having at least one holding element (41) for integrating functionally essential operator control elements and units (410, 412, 416), the holding element (41) being arranged on a carrying element (40) and being mounted so as to be pivotable about an axis (A) which is oriented in the transverse direction of the vehicle, **characterized in that** the carrying element (40) is mounted so as to be pivotable about the one axis (A) and about the further axis (B) which is oriented essentially in parallel with the one axis (A).

2. Operator control console according to Claim 1, **characterized in that** the carrying element (40) is arranged on a securing bar (44) on which the further axis (B) is formed.

3. Operator control console according to Claim 1 or 2, **characterized in that** it is adjustable in the transverse direction of the vehicle.

4. Operator control console according to one of Claims 1 to 3, **characterized in that** the carrying element (40) comprises a first planar carrying face (400) and a second planar carrying face (401) which are at an acute angle (α) with respect to one another.

5. Operator control console according to Claim 4, **characterized in that** at least one carrying face (400) has at least one cut-out (403).

6. Operator control console according to one of Claims 1 to 5, **characterized in that** the holding element (41) is arranged, viewed from the driver, in such a way that it is located essentially above the carrying element (40).

7. Operator control console according to one of Claims 1 to 6, **characterized in that** the holding element (41) is embodied with an essentially cylindrical cross section.

8. Operator control console according to one of Claims 1 to 7, **characterized in that** the holding element (41) and the carrying element (40) are connected to one another in one piece.

9. Operator control console according to one of Claims 1 to 8, **characterized in that** an operator control element (410) for setting the gearbox, in each case one operator control element (414, 415) for heating on the one hand and the blower on the other and an operator control element (416) for distributing the air stream are held in the holding element (41).

10. Operator control console according to Claim 9, **characterized in that** the operator control elements (412) for heating and blower are arranged concentrically with respect to one another.

11. Operator control console according to one of Claims 1 to 10, **characterized in that** a switch unit (42) is attached to the carrying element (40), and a display unit (43) is attached underneath said switch unit (42).

## Revendications

1. Panneau de commande mobile (4) pour une automobile, recevant plusieurs organes ou unités de commande (42, 43, 410, 412, 416) appartenant au domaine des fonctions visuelles et/ou manuelles du conducteur, avec au moins un élément porteur (41) pour l'intégration d'organes ou d'unités de commande importants pour le fonctionnement (410, 412, 416), l'élément porteur (41) étant disposé sur un élément support (40) et monté de manière pivotante autour d'un axe (A) orienté dans le sens transversal du véhicule, **caractérisé en ce que** l'élément support (40) est monté de manière pivotante autour d'un axe (A) et autour d'un autre axe (B) orienté de manière sensiblement parallèle à un axe (A) .

2. Panneau de commande selon la revendication 1, **caractérisé en ce que** l'élément support (40) est disposé sur un étrier support (44) sur lequel est aménagé l'autre axe (B).

3. Panneau de commande selon la revendication 1 ou 2, **caractérisé en ce que** celui-ci est réglable dans le sens transversal du véhicule.

4. Panneau de commande selon l'une des revendications 1 à 3, **caractérisé en ce que** l'élément support (40) comprend une première surface porteuse plane (400) et une seconde surface porteuse plane (401) disposées suivant un angle obtus (α) l'une par rapport à l'autre.

5. Panneau de commande selon la revendication 4, **caractérisé en ce qu'**au moins une surface porteuse (400) présente au moins un évidement (403).

6. Panneau de commande selon l'une des revendications 1 à 5, **caractérisé en ce que** l'élément porteur (41), vu depuis le poste du conducteur, est disposé de sorte qu'il se trouve pour l'essentiel au-dessus de l'élément support (40).

7. Panneau de commande selon l'une des revendications 1 à 6, **caractérisé en ce que** l'élément porteur (41) présente sur son contour une forme sensiblement cylindrique.

8. Panneau de commande selon l'une des revendications 1 à 7, **caractérisé en ce que** l'élément porteur (41) et l'élément support (40) sont reliés de manière monobloc.

9. Panneau de commande selon l'une des revendications 1 à 8, **caractérisé en ce que** l'élément porteur (41) reçoit un organe de commande (410) pour le réglage de la boîte de vitesses, respectivement un organe de commande (414, 415) du chauffage d'une part et du ventilateur d'autre part, ainsi qu'un organe de commande (416) pour la distribution du courant d'air.

10. Panneau de commande selon la revendication 9, **caractérisé en ce que** les organes de commande (412) du chauffage et du ventilateur sont disposés de manière concentrique l'un par rapport à l'autre.

11. Panneau de commande selon l' une des revendications 1 à 10, **caractérisé en ce qu'**une unité de commutateurs (42) et, au-dessous de celle-ci, une unité d'affichage (43) sont fixées sur l'élément support (40).
